# EUROPEAN PATENT APPLICATION

(11) **EP 4 579 502 A1**
(43) Date of publication of application: **02.07.2025**
(21) Application number: 24215346.8
(22) Date of filing: 26.11.2024
(51) Int. Cl.: G06F 21/51, G06F 21/56, G06F 21/57

(54) **USING LARGE LANGUAGE MODELS TO GENERATE NATURAL LANGUAGE DESCRIPTIONS OF CODE FOR ENHANCED THREAT ANALYSIS AND MALWARE DETECTION**

(30) Priority: 28.12.2023 US 202318399390
(71) Applicant: CrowdStrike, Inc., Sunnyvale, CA 94086 (US)
(72) Inventor: Monea, Damian, Sunnyvale, 94086 (US); Cocea, Bogdan, Sunnyvale, 94086 (US); Gaman, Mihaela, Sunnyvale, 94086 (US)
(74) Representative: Murgitroyd & Company

(57) **Abstract**

A system and method of using generative AI to generate natural language descriptions of code for enhanced threat analysis and malware detection. The method includes determining that a file comprises source code for causing malicious activity. The method includes generating, by a processing device and using one or more large language models (LLMs), natural language (NL) descriptions of the source code responsive to determining whether the file comprises the source code to cause the malicious activity. The method includes providing the NL descriptions of the source code to a classification model trained to generate a first set of maliciousness scores each indicating whether source codes are associated with one or more types of malicious activity. The method includes generating, using the classification model, a maliciousness score for the source code indicating that the source code is associated with the one or more types of malicious activity.

## Description

### TECHNICAL FIELD

The present disclosure relates generally to cybersecurity, and more particularly, to systems and methods of using generative artificial intelligence (AI), such as large language models (LLMs), to generate natural language descriptions of code (e.g., source code, executable code) for enhanced threat analysis and malware detection.

### BACKGROUND

Cybersecurity is the practice of protecting critical systems and sensitive information from digital attacks. Cybersecurity techniques are designed to combat threats against networked systems and applications, whether those threats originate from inside or outside of an organization.

### SUMMARY

Accordingly there is provided a method, a system, and a computer program as detailed in the claims that follow.

### BRIEF DESCRIPTION OF THE DRAWINGS

The described embodiments and the advantages thereof may best be understood by reference to the following description taken in conjunction with the accompanying drawings. These drawings in no way limit any changes in form and detail that may be made to the described embodiments by one skilled in the art without departing from the spirit and scope of the described embodiments.
FIG. 1 is a block diagram depicting an example environment for using generative artificial intelligence to generate natural language descriptions of code for enhanced threat analysis and malware detection, according to some embodiments;
FIG. 2A is a block diagram depicting an example of the cybersecurity management (CSM) system of the environment in FIG. 1, according to some embodiments;
FIG. 2B is a block diagram depicting an example environment for using the CSM system in FIG. 1, according to some embodiments;
FIG. 3 is a flow diagram depicting a method of using generative artificial intelligence to generate natural language descriptions of code for enhanced threat analysis and malware detection, according to some embodiments; and
FIG. 4 is a block diagram of an example computing device that may perform one or more of the operations described herein, in accordance with some embodiments.

### DETAILED DESCRIPTION

Computer programs written in a variety of languages are a well-known source of malware. The cybersecurity industry aims at having good coverage language-wise when it comes to source code malware detection. Beyond syntax, obfuscation, padding or any type of adversarial attacks based on code alteration, the functionality of a program is what speaks the loudest about its maliciousness.

Secure code review is a process that examines an application's source code. The goal of the review is to identify any existing security flaws or vulnerabilities. Code review specifically looks for logic errors, examines spec implementation, and checks style guidelines, among other activities. However, this process involves a person analyzing the source code, line by line, to find vulnerabilities (e.g., security threats) and understand the code. Not only is this a slow, laborious process, it requires a person to be versed in several programming languages to be able to understand the code instructions. There are no viable conventional solutions to assist a person with this level of code review. Therefore, most code that is deployed and permitted to run in a computing environment (e.g., private network, corporate network, and/or the like) often introduce a plethora of security vulnerabilities that degrade the computing environment, and lead to a waste of computing resources (e.g., memory, storage, processing, and/or networking).

Aspects of the present disclosure address the above-noted and other deficiencies by using generative artificial intelligence (e.g., LLMs, Recurrent Neural Network, text generating model based on diffusion techniques) to generate natural language descriptions of code (e.g., source code, executable code) for enhanced threat analysis and malware detection. The present disclosure provides a cybersecurity management (CSM) system that uses LLMs, powered by Neural Machine Translation (NMT), to generate code descriptions for cybersecurity pipelines for malware detection in the code, which the cybersecurity system uses to reduce false positives (FPs) when determining if the code is malicious or non-malicious (e.g., clean, benign). The CSM system may also be used for threat analysis, such as corpus creation and malware tagging. The CSM system may also be used to confirm whether a machine learning model is able to accurately detect malicious and non-malicious portions in source code.

In some examples, the CSM system includes an LLM-based code explainer that performs the following workflow: A new source code example is presented to the CSM system due to on-demand statically scanning of the file system or dynamically running the program and sending the source code to the CSM system. The CSM system predicts on the input source code using an ML (machine learning) model specialized in malware detection. The output of the ML model is a floating point number: the probability that based on its content, this source code implements malicious behavior. Depending on a given threshold - i.e., how high should this probability (also named decision value) be for the CSM system to consider the source code as malicious - the output of the malware classifier will be clean / malicious. The CSM system runs the malicious code through the LLM-based code explainer to generate an explanation in natural language for the given code. The CSM system stores the explanation indexed by a hash (e.g., SHA256) of the content for further analysis. The CSM system runs an ML classifier trained on explanations to triage potential FPs. The detects that are considered malicious by the ML classifier may be treated as such. An analyst (e.g., administrator, threat analyst, malware researcher, etc.) may use the natural language description of the code to improve analysis of the code.

In an illustrative embodiment, a CSM system determines that a file (e.g., a stand-alone file or a file attached to an email) includes source code for causing malicious activity. The CSM system generates, using one or more large language models, natural language (NL) descriptions of the source code responsive to determining that the file includes the source code for causing the malicious activity. The CSM system provides the NL descriptions of the source code to a classification model that is trained to generate a first set of maliciousness score, where each maliciousness score indicates whether source codes are associated with one or more types (e.g., specific type of calls) of malicious activity. For example, the maliciousness score indicates that the source code is associated with the one or more types of malicious activity or the source code fails to meet the criteria for being associated with the one or more types of malicious activity. The CSM system generates, using the classification model, a maliciousness score for the source code indicating that the source code is associated with the one or more types of malicious activity.

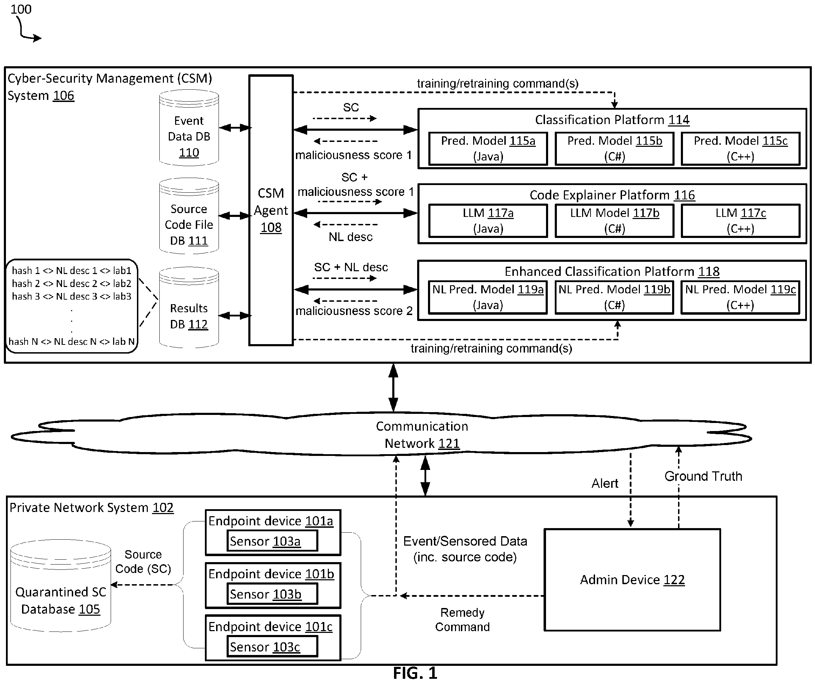

FIG. 1 is a block diagram depicting an example environment for using generative artificial intelligence to generate natural language descriptions of code for enhanced threat analysis and malware detection, according to some embodiments. The environment 100 includes CSM system 106 and a private network system 102 (e.g., a corporate network, a local area network (LAN), a wide area network (WAN), a personal area network (PAN)) that are communicably coupled together via a communication network 121. The private network system 102 includes endpoint devices 101 (e.g., endpoint device 101a, 101b, 101c, 101d), an administrative device 122 (shown in FIG. 1 as, admin device), and a quarantine source code database 105, that are each communicably coupled together via a private communication network of the private network system 102. In some embodiments, the administrative device 122 may reside outside of the private network system 102 and instead may be a component of a third-party (e.g., a cybersecurity company) responsible for providing cyber security services to the private network system 102.

The CSM system 106 includes and/or executes an CSM agent 108, a classification platform 114, a code explainer platform 116, an enhanced classification platform 118, an event database (DB) 110, a source code database 111, a results database 112. In some embodiments, the event database 110, the source code database 111, and/or the results database 112 may be an elastic search cluster.

The CSM agent 108 deploys a sensor 103 onto each of the endpoint devices 101 of the private network system 102 by sending (e.g., broadcasting) messages to the endpoint devices 101. The messages cause the endpoint devices 101 to install the sensor 103 onto its own resources (e.g., memory, storage, processor). For example, endpoint device 101a installs sensor 103a, endpoint device 101b installs sensor 103b, and endpoint device 101c installs sensor 103c (each collectively referred to as, sensors 103).

Each sensor 103 is configured to monitor (e.g., track) and detect each event involving the endpoint device 101 that executes the sensor 103. An event may be, for example, a process control call (e.g., load, execute, abort, and/or the like), a file management call (e.g., open, write, read, close), a device management call (e.g., a call used to manage devices such as printers, scanners, and disk drives), an information management call, a communication call, a protection call, and/or the like. For example, an event may be the moment when an endpoint 101 downloads a file (e.g., an email, a text file, source code, a binary file, an executable file, etc.) from another computing device via the communication network 121 or Internet. As another example, an event may be the moment when an endpoint 101 attempts to open and/or execute a file.

An event may also be any type of communication (e.g., transmission/transmit, reception/receive) that takes place between the endpoint device 101 and any other computing device (e.g., endpoint device 101, administrative 122). Each communication includes a header (e.g., source network address, destination network address, and/or the like) and a message body (e.g., text, code, etc.). The sensor 103 also assigns a time stamp to the gathered event data (which also includes the communication data) and records (e.g., stores) the event data in a local storage (e.g., memory, database, cache) of the respective endpoint device 101. Therefore, each endpoint device 101 may use its sensor 103 to keep track all network addresses (e.g., internet protocol (IP) address, Media Access Control (MAC) address, telephone number, and/or the like) of the endpoint device 101 on the private network system 102 that are currently communication with the endpoint device 101 and/or have previously communicated (sometimes referred to as historical communication) with the endpoint device 101.

Each of the endpoint devices 101 of the private network system 102 periodically sends its locally stored event data (which is indicative of the events) to the CSM agent 108 of the CSM system 106. For example, an endpoint device 101 may send its locally stored event data to the CSM agent 108 of the CSM system 106 responsive to determining an occurrence of a triggering event, for example, an elapse of time (e.g., every minute, hour, and/or day) and/or whether the endpoint device 101 determines that new event data is available.

The event data also includes any files (e.g., an email, a text file, source code, a binary file, an executable file, etc.), or file identifiers (e.g., hash values, network addresses, web links, directory paths, and/or the like) that point to the file that is stored on a remote storage, that are associated with the event data. A file may include computer code of any type including, for example, Java, C#, C++, Python, Hypertext Preprocessor (PHP), Structured Query Language (SQL), JavaScript, Perl, HyperText Markup Language (HTML), machine language, and/or the like.

The event data may also include any communication, or communication identifiers that point to the communication that is stored on a remote storage, that takes place between the endpoint devices 101. The CSM agent 108 stores the event data in the event data database 110. The CSM agent 108 may also extract the source code file (sometimes referred to as, source code) from the event data and store the source code file in the source code database 111. In some embodiments, the CSM agent 108 may extract a file identifier from the event data and use the file identifier to retrieve the source code file from a remote storage. In some embodiments, the CSM agent 108 may generate a file identifier for a file by hashing the file using a hashing function (e.g., SHA 256 hash). The CSM agent 108 may link the file identifier to the file and store the file identifier and the file in the source code file database 111.

The classification platform 114 includes and/or executes predictive models 115 (e.g., predictive model 115a, predictive model 115b, and predictive model 115c) for classifying a file, that includes computer code (e.g., source code, executable code, and/or object code). Specifically, the classification platform 114 includes a predictive model 115a that is trained to generate, based on a file including computer code of a first type (e.g., Java), a maliciousness score (e.g., a number equal to or between 0 to 100) indicating a likelihood that the file is associated with one or more types of malicious activity. The classification platform 114 also includes a predictive model 115b that is trained to generate, based on a file including computer code of a second type (e.g., C#), a maliciousness score indicating a likelihood that the file is associated with one or more types of malicious activity. The classification platform 114 also includes a predictive model 115c that is trained to generate, based on a file including computer code of a third type (e.g., C++), a maliciousness score indicating a likelihood that the file is associated with one or more types of malicious activity.

A file may be configured to issue one or more calls that the classification platform 114 considers as malicious activity. For example, the file may be configured to issue a process control call (e.g., create process, terminate process, load/execute, get/set process attributes, wait for time, wait event, signal event, allocate memory, and free memory), a file management call (e.g., create file, delete file, open/close file, read/write file, reposition/move file, get/set file attributes), a device management call (e.g., request device, release device, read, write, reposition, get/set device attributes, logically attach or detach devices), an information management call (e.g., get/set total system information, get/set process, file, or device metadata), a communication call (e.g., create/delete communication connection, send/receive messages, transfer status information, attach or detach remote devices), and/or a protection call (e.g., get/set file permission). The classification platform 114 may consider an individual call or a particular sequence of calls as malicious activity if the one or more calls attempt to gain access to sensitive information and/or the ability to control computing resources of a computing device, and where the file was not previously given the appropriate permissions for such access and/or control. Example files that are designed to carry out malicious activity include backdoor attacks, scripting attacks, worms, trojan horse, spyware, malware, spam, and/or the like.

The classification platform 114 sends a message to the CSM agent 108, where the message includes the file (or file identifier) and the maliciousness score (shown in FIG. 1 as, maliciousness score 1) that is assigned to the file. The CSM agent 108 stores the maliciousness score and linked file (or file identifier) in the results database 112. The classification platform 114 also stores the file in the source code file database 111.

Although FIG. 1 shows that the classification platform 114 includes a select number of predictive models 115 that are each trained to analyze a file that includes computer code of a particular type, the classification platform 114 may include any number of predictive models 115 that are each trained to generate, based on a file including one or more different types of computer code, a maliciousness score indicating a likelihood that the file is associated with one or more types of malicious activity. A particular type of computer code may include, for example, Java, C#, C++, Python, PHP, SQL, JavaScript, Perl, HTML, machine language, and/or the like.

The CSM agent 108 may use different sets of classification platform (CP) training data to train each of the predictive models 115 of the classification platform 114, where each set of CP training data may be retrieved from one of more databases (e.g., event database 110 and/or source code file database 111). Specifically, the CSM agent 108 may use a first set of CP training data to train the predictive model 115a to generate maliciousness score based on a file including computer code of a first type (e.g., Java). The CSM agent 108 may use a second set of CP training data to train the predictive model 115b to generate maliciousness score based on a file including computer code of a second type (e.g., C#). The CSM agent 108 may use a third set of CP training data to train the predictive model 115c to generate a maliciousness score based on a file including computer code of a third type (e.g., C++).

The first set of CP training data may include event data and files, where each file includes computer code of at least the first type (e.g., Java). The first set of CP training data may also include ground truth data (e.g., labels) indicating whether each file is malicious or non-malicious. A file is deemed to be malicious if it includes or references code that is designed, when executed by a computer, to waste computer resources (e.g., memory, hard drive, processing, networking), harm the resources of a computer, and/or cause one or more computers to perform deceptive operations. Examples of malicious code include backdoor attacks, scripting attacks, worms, trojan horse, spyware, malware, spam, and/or the like. The second set of CP training data may include event data and files, where each file includes computer code of at least the second type (e.g., C#). The second set of CP training data may also include ground truth data indicating whether each file is malicious or non-malicious. The third set of CP training data may include event data and files, where each file includes computer code of at least the third type (e.g., C++). The third set of CP training data may also include ground truth data indicating whether each file is malicious or non-malicious.

The code explainer platform 116 includes and/or executes LLMs 117 (e.g., LLM 117a, LLM 117b, and LLM 117c) for generating natural language explanations for computer code (e.g., source code, executable code, and/or object code). Specifically, the code explainer platform 116 includes an LLM 117a that is trained to generate, based on a file including computer code of a first type (e.g., Java), a NL description dataset that provides a NL description of the file. The code explainer platform 116 includes an LLM 117b that is trained to generate, based on a file including computer code of a second type (e.g., C#), a NL description dataset that provides a NL description of the file. The code explainer platform 116 includes an LLM 117c that is trained to generate, based on a file including computer code of a third type (e.g., C++), a NL description dataset that provides a NL description of the file. Although FIG. 1 shows that the code explainer platform 116 includes a select number of LLMs 117 that are each trained to analyze a file that includes computer code of a particular type, the code explainer platform 116 may include any number of LLMs 117 that are each trained to generate, based on a file including one or more different types of computer code, a NL description dataset that provides a NL description of the file. A particular type of computer code may include, for example, Java, C#, C++, python, PHP, SQL, JavaScript, Perl, HTML, machine language, and/or the like.

The code explainer platform 116 sends a message to the CSM agent 108, where the message includes the file (or file identifier) and the NL description dataset (shown in FIG. 1 as, "NL desc") that is assigned to the file. The CSM agent 108 stores the NL description dataset and linked file (or file identifier) in the results database 112. The classification platform 114 also stores the file in the source code file database 111.

Each LLM 117 generates, for each ingested file, its own NL description dataset. The NL description dataset includes an explanation in natural language (e.g., a language that has developed and evolved naturally, through use by human beings) of any computer code that is contained in the ingested file. For example, a NL description dataset may use natural language to describe the types of operations (e.g., calls, instructions) that are performed by a computing device in response to executing the file. The NL description dataset may use natural language to describe the order (e.g., sequence) in which the operations are to be performed, according to the file. The NL description dataset may use natural language to identify any databases (e.g., local, remote), libraries, variables, user input (e.g., audio, visual) and associated data, user interactions (e.g., touch screen interactions, mouse movement/clicks) and associated data, and/or the like that are used by a computing device to perform the operations of the file. The NL description dataset may use natural language to describe the maliciousness score of the file and whether the maliciousness score falls within a specific threshold band (sometimes referred to as a maliciousness category), such as high threat, medium threat, or low threat. For example, the NL description may indicate that the classification platform 114 assigned a maliciousness score of 80% to the file and that the CSM system 106 (e.g., the CSM agent 108 or the classification platform 114) determined that the 80% falls within the range corresponding to the high threshold band. In some embodiments, a high threshold means that the given sample has the highest probability of being correctly classified as malicious.

The enhanced classification platform 118 includes and/or executes natural language (NL) predictive models 119 (e.g., NL predictive model 119a, NL predictive model 119b, and NL predictive model 119c) for classifying a file, that includes computer code (e.g., source code, executable code, and/or object code). Specifically, the enhanced classification platform 118 includes an NL predictive model 119a that is trained to generate, based on (1) a file including computer code of a first type (e.g., Java) and (2) a NL description of the file, a maliciousness score (e.g., a number equal to or between 0 to 100) indicating a likelihood of the file to be associated with one or more types of malicious activity. The enhanced classification platform 118 also includes an NL predictive model 119b that is trained to generate, based on (1) a file including computer code of a second type (e.g., C#) and (2) an NL description of the file, a maliciousness score indicating a likelihood that the file is associated with one or more types of malicious activity. The enhanced classification platform 118 also includes an NL predictive model 119c that is trained to generate, based on a file including computer code of a third type (e.g., C++), a maliciousness score indicating a likelihood that the file is associated with one or more types of malicious activity. Although FIG. 1 shows that the enhanced classification platform 118 includes a select number of NL predictive models 119 that are each trained to analyze a file that includes computer code of a particular type, the enhanced classification platform 118 may include any number of NL predictive models 119 that are each trained to generate, based on a file including one or more different types of computer code, a maliciousness score indicating a likelihood that the file is associated with one or more types of malicious activity. A particular type of computer code may include, for example, Java, C#, C++, Python, PHP, SQL, JavaScript, Perl, HTML, machine language, and/or the like.

The enhanced classification platform 118 sends a message to the CSM agent 108, where the message includes the file (or file identifier) and the maliciousness score (shown in FIG. 1 as, "maliciousness score 2") that is assigned to the file. The CSM agent 108 stores the maliciousness score and linked file (or file identifier) in the results database 112. The classification platform 114 also stores the file in the source code file database 111.

The CSM agent 108 may use different sets of enhanced classification platform (ECP) training data to train each of the predictive models 115 of the classification platform 114, where each set of ECP training data may be retrieved from one of more databases (e.g., event database 110, source code file database 111, and/or results database 112). Specifically, the CSM agent 108 may use a first set of ECP training data to train the predictive model 115a to generate a maliciousness score based on a file including computer code of a first type (e.g., Java). The CSM agent 108 may use a second set of ECP training data to train the predictive model 115b to generate maliciousness score based on a file including computer code of a second type (e.g., C#). The CSM agent 108 may use a third set of ECP training data to train the predictive model 115c to generate a maliciousness score based on a file including computer code of a third type (e.g., C++).

The first set of ECP training data may include natural language (NL) description data, event data, and files; where each file includes computer code of at least the first type (e.g., Java). The first set of ECP training data may also include ground truth data (e.g., labels) indicating whether each file is malicious (e.g., includes code that is designed to waste computer resources, harm the resources of a computer, and/or perform deceptive operations using the computer) or non-malicious. The second set of ECP training data may include NL description data, event data, and files; where each file includes computer code of at least the second type (e.g., C#). The second set of ECP training data may also include ground truth data indicating whether each file is malicious or non-malicious. The third set of ECP training data may include NL description data, event data, and files; where each file includes computer code of at least the third type (e.g., C++). The third set of ECP training data may also include ground truth data indicating whether each file is malicious or non-malicious.

The CSM agent 108 associates several datasets together and stores the associated data in the results database 112. For example, as shown in FIG. 1, the results database 112 includes a first dataset that associates a hash (e.g., hash 1) of file 1 with a NL description 1 of file 1 and a label 1 indicating whether file 1 is malicious or non-malicious; a second dataset that associates a hash (e.g., hash 2) of file 2 with a NL description 2 of file 2 and a label 2 indicating whether file 2 is malicious or non-malicious; a third dataset that associates a hash (e.g., hash 3) of file 3 with a NL description 3 of file 3 and a label 3 indicating whether file 3 is malicious or non-malicious; up to an N-th dataset that associates a hash (e.g., hash N) of file N with a NL description N of file N and a label N indicating whether file N is malicious or non-malicious.

A communication network (e.g., communication network 121, a private communication network of the private network system 102) may include a wired or a wireless infrastructure, which may be provided by one or more wireless communications systems, such as wireless fidelity (Wi-Fi) connectivity to the communication network and/or a wireless carrier system that can be implemented using various data processing equipment, communication towers (e.g., cell towers), etc. The communication network may carry communications (e.g., data, message, packets, frames, etc.) between any other computing device.

Still referring to FIG. 1, the CSM system 106 determines that a file (e.g., a stand-alone file or a file attached to an email) includes source code for causing malicious activity. The CSM system 106 generates, using one or more large language models (LLMs), natural language (NL) descriptions of the source code responsive to determining that the file includes the source code for causing the malicious activity. The CSM system 106 provides the NL descriptions of the source code to a classification model that is trained to generate a first set of maliciousness score, where each maliciousness score indicates whether source codes are associated with one or more types of malicious activity. The CSM system 106 generates, using the classification model, a maliciousness score for the source code indicating that the source code is associated with the one or more types of malicious activity.

Although FIG. 1 shows only a select number of computing devices (e.g., CSM system 106, endpoint device 101, admin devices 122) and private network systems 102; the environment 100 may include any number of computing devices and private network systems that are interconnected in any arrangement to facilitate the exchange of data between the computing devices and the private network systems.

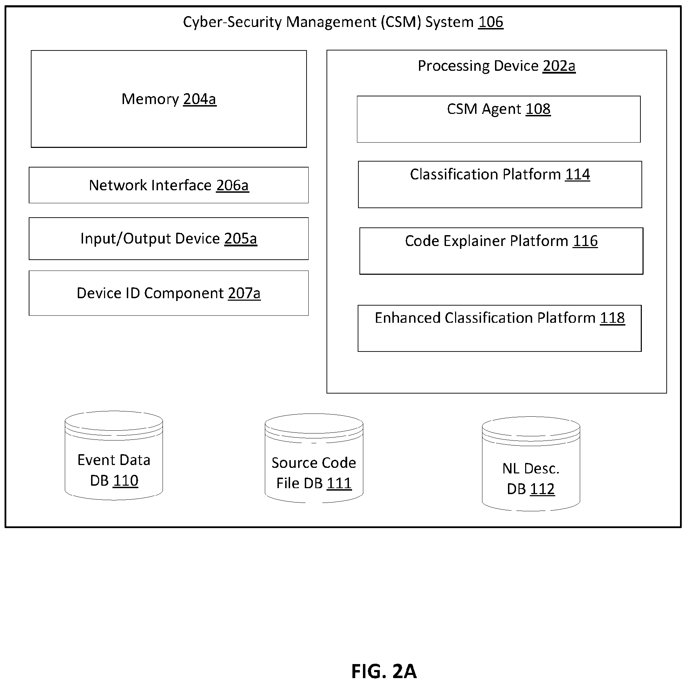

FIG. 2A is a block diagram depicting an example of the cybersecurity management (CSM) system of the environment in FIG. 1, according to some embodiments. While various devices, interfaces, and logic with particular functionality are shown, it should be understood that the CSM system 106 includes any number of devices and/or components, interfaces, and logic for facilitating the functions described herein. For example, the activities of multiple devices may be combined as a single device and implemented on the same processing device (e.g., processing device 202), as additional devices and/or components with additional functionality are included.

The CSM system 106 includes a processing device 202a (e.g., general purpose processor, a PLD, etc.), which may be composed of one or more processors, and a memory 204a (e.g., synchronous dynamic random-access memory (DRAM), read-only memory (ROM)), which may communicate with each other via a bus (not shown).

The processing device 202a may be provided by one or more general-purpose processing devices such as a microprocessor, central processing unit, or the like. In some embodiments, processing device 202a may include a complex instruction set computing (CISC) microprocessor, reduced instruction set computing (RISC) microprocessor, very long instruction word (VLIW) microprocessor, or a processor implementing other instruction sets or processors implementing a combination of instruction sets. In some embodiments, the processing device 202a may include one or more special-purpose processing devices such as an application specific integrated circuit (ASIC), a field programmable gate array (FPGA), a digital signal processor (DSP), network processor, or the like. The processing device 202a may be configured to execute the operations described herein, in accordance with one or more aspects of the present disclosure, for performing the operations and steps discussed herein.

The memory 204a (e.g., Random Access Memory (RAM), Read-Only Memory (ROM), Non-volatile RAM (NVRAM), Flash Memory, hard disk storage, optical media, etc.) of processing device 202a stores data and/or computer instructions/code for facilitating at least some of the various processes described herein. The memory 204a includes tangible, non-transient volatile memory, or non-volatile memory. The memory 204a stores programming logic (e.g., instructions/code) that, when executed by the processing device 202, controls the operations of the CSM system 106. In some embodiments, the processing device 202a and the memory 204a form various processing devices and/or circuits described with respect to the CSM 106. The instructions include code from any suitable computer programming language such as, but not limited to, C, C++, C#, Java, JavaScript, VBScript, Perl, HTML, XML, Python, TCL, and Basic.

The processing device 202a executes a CSM agent 108, code explainer platform 116, and an enhanced classification platform 118. The CSM system 106 includes an event database 110, a source code file database 111, and a natural language description database 112. The CSM agent 106 may be configured to use the classification platform 114 to determine that a file comprises source code for causing malicious activity. The CSM agent 106 may be configured to generate, using one or more LLMs of the code explainer platform 116, NL descriptions of the source code responsive to determining that the file includes the source code to cause the malicious activity. The CSM agent 106 may be configured to provide the NL descriptions of the source code to a classification model (e.g., enhanced classification platform 118) trained to generate a first set of maliciousness scores each indicating whether source codes are associated with one or more types of malicious activity. The CSM agent 106 may be configured to generate, using the classification model (e.g., enhanced classification platform 118), a maliciousness score for the source code indicating that the source code is associated with the one or more types of malicious activity.

The CSM agent 106 may be configured to acquire (e.g., receive, retrieve) event data indicating that an endpoint device downloaded the file or attempted to execute the file.

The CSM agent 106 may be configured to determine that the file includes source code for causing malicious activity without executing executable code associated with the source code. The CSM agent 106 may be configured to generate, using the one or more LLMs, the NL descriptions of the source code, but without executing the executable code associated with the source code. The CSM agent 106 may be configured to generate, using the classification model, the maliciousness score for the source code, but without executing the executable code associated with the source code.

The CSM agent 106 may be configured to determine that the source code is associated with a particular programming language; and select, based on the particular programming language, a first LLM from a plurality of LLMs associated with a plurality of programming languages, each LLM is trained to ingest source code associated with a respective programming language of the plurality of programming languages.

The CSM agent 106 may be configured to determine that the file includes the source code to cause the malicious activity by providing the source code to a second classification model (e.g., classification platform 114) trained to generate a second set of maliciousness scores indicating whether the source codes are associated with the one or more types of malicious activity. The CSM agent 106 may be configured to generate, using the second classification model, a second maliciousness score for the source code indicating that the source code is associated with the one or more types of malicious activity.

The CSM agent 106 may be configured to determine that the source code is associated with a particular programming language. The CSM agent 106 may be configured to select, based on the particular programming language, the second classification model from a plurality of classification models associated with a plurality of programming languages, each classification model of the plurality of classification models is trained to ingest source code associated with a respective programming language of the plurality of programming languages.

The CSM agent 106 may be configured to maintain, in a database (e.g., NL description database 112) , a plurality of NL descriptions associated with a plurality of file identifiers. Each NL description of the plurality of NL descriptions is respectively associated with a respective file identifier of the plurality of file identifiers.

The CSM agent 106 may be configured to retrain (e.g., update, refine, fine-tune), using the plurality of NL descriptions, the classification model to generate a second set of maliciousness scores each indicating whether the source codes are associated with the one or more types of malicious activity. The CSM agent 106 may be configured to retrain, using the plurality of NL descriptions, the one or more LLMs to generate a set of NL descriptions of source codes. In some embodiments, the CSM agent 106 may be configured to retrain or fine-tune 1 total reaction.

The CSM agent 106 may be configured to send, to the admin device 122, an alert indicating at least one of the NL descriptions of the source code, the maliciousness score for the source code, or a maliciousness category corresponding to the maliciousness score. The CSM agent 106 may be configured to determine whether the source code is for causing malicious activity by comparing the maliciousness score to a predetermined threshold value. For example, if the CSM agent 106 determines that the maliciousness score is less than the predetermined threshold value, then the CSM agent 106 may determine that the source code is non-malicious. Alternatively, if the CSM agent 106 determines that the maliciousness score is greater than or equal to the predetermined threshold value, then the CSM agent 106 may determine that the source code is malicious. The CSM agent 106 may be configured to reduce (e.g., mitigate or eliminate) a number of false positives by redefining and/or marking (e.g., attaching a flag to the file and/or adding a flag in a file system that includes a reference to the file) the file as non-malicious.

In some embodiments, in response to receiving the alert, the admin device may send a remedy command to the endpoint device 101 to cause the endpoint device to send the source code to the quarantine source code database 105. In some embodiments, the admin device may send ground truth to the CSM system 106, where the ground truth indicates whether a particular source code is actually malicious or non-malicious.

The CSM system 106 includes a network interface 206 configured to establish a communication session with a computing device for sending and receiving data over the communication network 121 to the computing device. Accordingly, the network interface 206a includes a cellular transceiver (supporting cellular standards), a local wireless network transceiver (supporting 802.11X, ZigBee, Bluetooth, Wi-Fi, or the like), a wired network interface, a combination thereof (e.g., both a cellular transceiver and a Bluetooth transceiver), and/or the like. In some embodiments, the CSM system 106 includes a plurality of network interfaces 206 of different types, allowing for connections to a variety of networks, such as local area networks (public or private) or wide area networks including the Internet, via different sub-networks.

The CSM system 106 includes an input/output device 205a configured to receive user input from and provide information to a user. In this regard, the input/output device 205a is structured to exchange data, communications, instructions, etc. with an input/output component of the CSM system 106. Accordingly, input/output device 205a may be any electronic device that conveys data to a user by generating sensory information (e.g., a visualization on a display, one or more sounds, tactile feedback, etc.) and/or converts received sensory information from a user into electronic signals (e.g., a keyboard, a mouse, a pointing device, a touch screen display, a microphone, etc.). The one or more user interfaces may be internal to the housing of the CSM system 106, such as a built-in display, touch screen, microphone, etc., or external to the housing of the CSM system 106, such as a monitor connected to the CSM system 106, a speaker connected to the CSM system 106, etc., according to various embodiments. In some embodiments, the CSM system 106 includes communication circuitry for facilitating the exchange of data, values, messages, and the like between the input/output device 205a and the components of the CSM system 106. In some embodiments, the input/output device 205a includes machine-readable media for facilitating the exchange of information between the input/output device 205a and the components of the CSM system 106. In still another embodiment, the input/output device 205a includes any combination of hardware components (e.g., a touchscreen), communication circuitry, and machine-readable media.

The CSM system 106 includes a device identification component 207a (shown in FIG. 2A as device ID component 207) configured to generate and/or manage a device identifier associated with the CSM system 106. The device identifier may include any type and form of identification used to distinguish the CSM system 106 from other computing devices. In some embodiments, to preserve privacy, the device identifier may be cryptographically generated, encrypted, or otherwise obfuscated by any device and/or component of the CSM system 106. In some embodiments, the CSM system 106 may include the device identifier in any communication (e.g., classifier performance data, input message, parameter message, etc.) that the CSM system 106 sends to a computing device.

The CSM system 106 includes a bus (not shown), such as an address/data bus or other communication mechanism for communicating information, which interconnects the devices and/or components of the CSM system 106, such as processing device 202, network interface 206, input/output device 205a, and device ID component 207.

In some embodiments, some or all of the devices and/or components of CSM system 106 may be implemented with the processing device 202a. For example, the CSM system 106 may be implemented as a software application stored within the memory 204a and executed by the processing device 202a. Accordingly, such embodiment can be implemented with minimal or no additional hardware costs. In some embodiments, any of these above-recited devices and/or components rely on dedicated hardware specifically configured for performing operations of the devices and/or components.

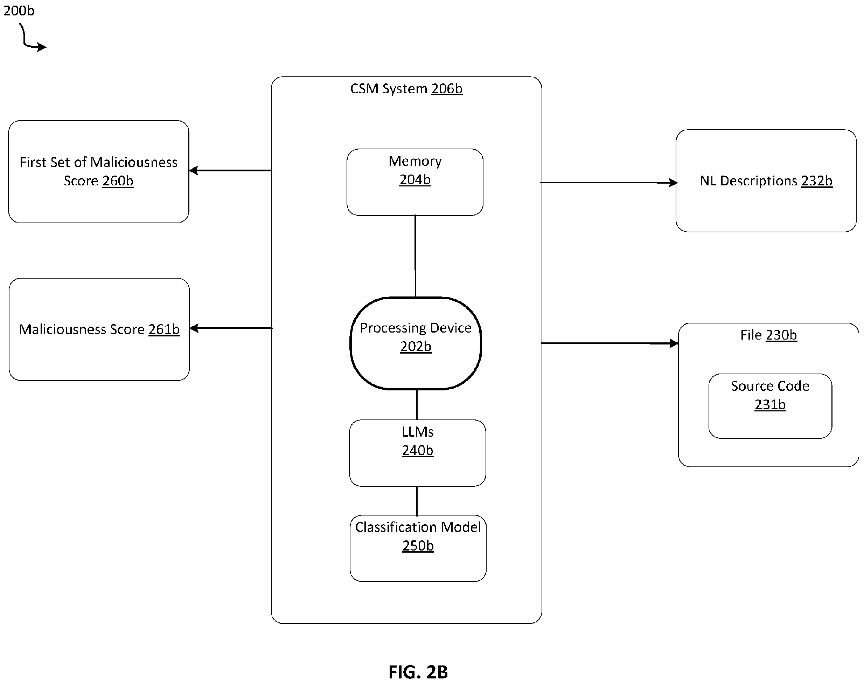

FIG. 2B is a block diagram depicting an example environment for using the CSM system in FIG. 1, according to some embodiments. The CMS system 106 includes a memory 204b and a processing device 202b that is operatively coupled to the memory 204b. The CSM system 206b determines that a file 230b includes source code 231b for causing malicious activity. The CSM system 206b generates, using one or more LLMs 240b, NL descriptions 232b of the source code 231b responsive to determining that the file 230b includes the source code 231b for causing the malicious activity. The CSM system 206b provides the NL descriptions 232b of the source code 231b to a classification model 250b that is trained to generate a first set of maliciousness score 260b, where each maliciousness score 260 indicates whether source codes are associated with one or more types of malicious activity. The CSM system 206b generates, using the classification model 250b, a maliciousness score 261b for the source code 231b indicating that the source code 231b is associated with the one or more types of malicious activity.

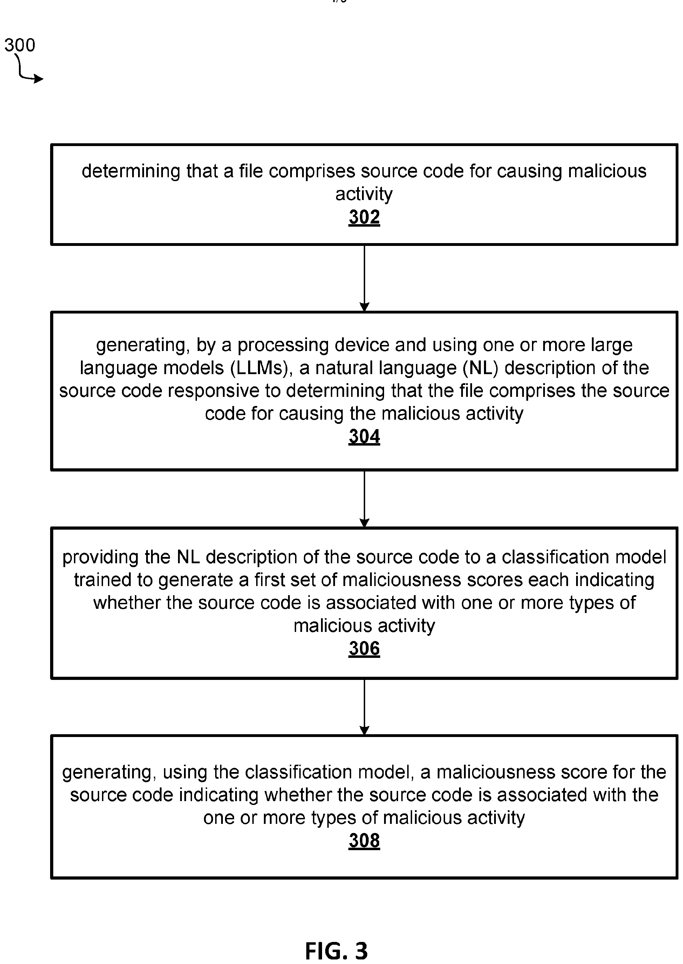

FIG. 3 is a flow diagram depicting a method of using generative artificial intelligence to generate natural language descriptions of code for enhanced threat analysis and malware detection, according to some embodiments. Method 300 may be performed by processing logic that may include hardware (e.g., circuitry, dedicated logic, programmable logic, a processor, a processing device, a central processing unit (CPU), a system-on-chip (SoC), etc.), software (e.g., instructions running/executing on a processing device), firmware (e.g., microcode), or a combination thereof. In some embodiments, method 300 may be performed by a cybersecurity management system, such as the CSM system 106 in FIG. 1. In some embodiments, method 300 may be performed by one or more computing devices (e.g., endpoint device 101, admin device 112) of a private network system, such as private network system 102 in FIG. 1.

With reference to FIG. 3, method 300 illustrates example functions used by various embodiments. Although specific function blocks ("blocks") are disclosed in method 300, such blocks are examples. That is, embodiments are well suited to performing various other blocks or variations of the blocks recited in method 300. It is appreciated that the blocks in method 300 may be performed in an order different than presented, and that not all of the blocks in method 300 may be performed.

The method 300 includes the block 302 of determining that a file comprises source code for causing malicious activity. The method 300 includes the block 304 of generating, by a processing device and using one or more large language models (LLMs), a natural language (NL) description of the source code responsive to determining that the file comprises the source code for causing the malicious activity. The method 300 includes the block 306 of providing the NL description of the source code to a classification model trained to generate a first set of maliciousness scores each indicating whether the source code is associated with one or more types of malicious activity. The method 300 includes the block 308 of generating, using the classification model, a maliciousness score for the source code indicating that the source code is associated with the one or more types of malicious activity.

In some embodiments, block 304 may occur after block 308 to support those end-users that want to generate descriptions only in certain conditions (e.g., disputed detection / customer reported FP). This might also reduce costs as the LLM is resource intensive and expensive to run. That is, running it only every once in a while might be a good option for some end-users.

In some embodiments, block 304 may be run asynchronously, such that the system is not blocking a real time detection (e.g., some applications might need <1s response time for a detect and the LLM might take tens of seconds to run depending on the input length).

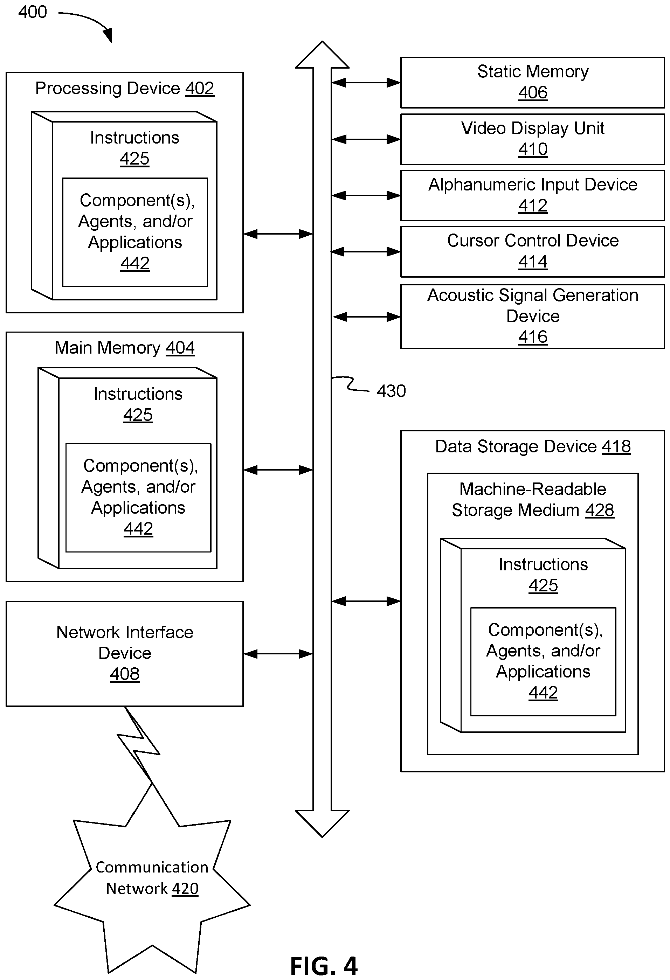

FIG. 4 is a block diagram of an example computing device 400 that may perform one or more of the operations described herein, in accordance with some embodiments. Computing device 400 may be connected to other computing devices in a LAN, an intranet, an extranet, and/or the Internet. The computing device may operate in the capacity of a server machine in a client-server network environment or in the capacity of a client in a peer-to-peer network environment. The computing device may be provided by a personal computer (PC), a set-top box (STB), a server, a network router, switch or bridge, or any machine capable of executing a set of instructions (sequential or otherwise) that specify actions to be taken by that machine. Further, while only a single computing device is illustrated, the term "computing device" shall also be taken to include any collection of computing devices that individually or jointly execute a set (or multiple sets) of instructions to perform the methods discussed herein.

The example computing device 400 may include a processing device *(e.g.,* a general-purpose processor, a PLD, etc.) 402, a main memory 404 (e.g., synchronous dynamic random-access memory (DRAM), read-only memory (ROM)), a static memory 406 *(e.g.,* flash memory and a data storage device 418), which may communicate with each other via a bus 430.

Processing device 402 may be provided by one or more general-purpose processing devices such as a microprocessor, central processing unit, or the like. In an illustrative example, processing device 402 may include a complex instruction set computing (CISC) microprocessor, reduced instruction set computing (RISC) microprocessor, very long instruction word (VLIW) microprocessor, or a processor implementing other instruction sets or processors implementing a combination of instruction sets. Processing device 402 may also include one or more special-purpose processing devices such as an application specific integrated circuit (ASIC), a field programmable gate array (FPGA), a digital signal processor (DSP), network processor, or the like. The processing device 402 may be configured to execute the operations described herein, in accordance with one or more aspects of the present disclosure, for performing the operations and steps discussed herein.

Computing device 400 may further include a network interface device 408 which may communicate with a communication network 420. The computing device 400 also may include a video display unit 410 (e.g., a liquid crystal display (LCD) or a cathode ray tube (CRT)), an alphanumeric input device 412 (e.g., a keyboard), a cursor control device 414 *(e.g.,* a mouse) and an acoustic signal generation device 416 *(e.g.,* a speaker). In one embodiment, video display unit 410, alphanumeric input device 412, and cursor control device 414 may be combined into a single component or device (e.g., an LCD touch screen).

Data storage device 418 may include a computer-readable storage medium 428 on which may be stored one or more sets of instructions 425 that may include instructions for one or more components/programs/applications 442 (e.g., CSM agent 108, classification platform 114, code explainer platform 116, enhanced classification platform 118, etc.) for carrying out the operations described herein, in accordance with one or more aspects of the present disclosure. Instructions 425 may also reside, completely or at least partially, within main memory 404 and/or within processing device 402 during execution thereof by computing device 400, main memory 404 and processing device 402 also constituting computer-readable media. The instructions 425 may further be transmitted or received over a communication network 420 via network interface device 408.

While computer-readable storage medium 428 is shown in an illustrative example to be a single medium, the term "computer-readable storage medium" should be taken to include a single medium or multiple media (e.g., a centralized or distributed database and/or associated caches and servers) that store the one or more sets of instructions. The term "computer-readable storage medium" shall also be taken to include any medium that is capable of storing, encoding or carrying a set of instructions for execution by the machine and that cause the machine to perform the methods described herein. The term "computer-readable storage medium" shall accordingly be taken to include, but not be limited to, solid-state memories, optical media and magnetic media.

Unless specifically stated otherwise, terms such as "determining," generating," "providing," "receiving," "maintaining," "identifying," "selecting," "deploying," "performing," "identifying," "removing," or the like, refer to actions and processes performed or implemented by computing devices that manipulates and transforms data represented as physical (electronic) quantities within the computing device's registers and memories into other data similarly represented as physical quantities within the computing device memories or registers or other such information storage, transmission or display devices. Also, the terms "first," "second," "third," "fourth," etc., as used herein are meant as labels to distinguish among different elements and may not necessarily have an ordinal meaning according to their numerical designation.

Examples described herein also relate to an apparatus for performing the operations described herein. This apparatus may be specially constructed for the required purposes, or it may include a general-purpose computing device selectively programmed by a computer program stored in the computing device. Such a computer program may be stored in a computer-readable non-transitory storage medium.

The methods and illustrative examples described herein are not inherently related to any particular computer or other apparatus. Various general-purpose systems may be used in accordance with the teachings described herein, or it may prove convenient to construct more specialized apparatus to perform the required method steps. The required structure for a variety of these systems will appear as set forth in the description above.

The above description is intended to be illustrative, and not restrictive. Although the present disclosure has been described with references to specific illustrative examples, it will be recognized that the present disclosure is not limited to the examples described. The scope of the disclosure should be determined with reference to the following claims, along with the full scope of equivalents to which the claims are entitled.

As used herein, the singular forms "a", "an" and "the" are intended to include the plural forms as well, unless the context clearly indicates otherwise. It will be further understood that the terms "comprises", "comprising", "includes", and/or "including", when used herein, specify the presence of stated features, integers, steps, operations, elements, and/or components, but do not preclude the presence or addition of one or more other features, integers, steps, operations, elements, components, and/or groups thereof. Therefore, the terminology used herein is for the purpose of describing particular embodiments only and is not intended to be limiting.

It should also be noted that in some alternative implementations, the functions/acts noted may occur out of the order noted in the figures. For example, two figures shown in succession may in fact be executed substantially concurrently or may sometimes be executed in the reverse order, depending upon the functionality/acts involved.

Although the method operations were described in a specific order, it should be understood that other operations may be performed in between described operations, described operations may be adjusted so that they occur at slightly different times or the described operations may be distributed in a system which allows the occurrence of the processing operations at various intervals associated with the processing.

Various units, circuits, or other components may be described or claimed as "configured to" or "configurable to" perform a task or tasks. In such contexts, the phrase "configured to" or "configurable to" is used to connote structure by indicating that the units/circuits/components include structure (e.g., circuitry) that performs the task or tasks during operation. As such, the unit/circuit/component can be said to be configured to perform the task, or configurable to perform the task, even when the specified unit/circuit/component is not currently operational (e.g., is not on). The units/circuits/components used with the "configured to" or "configurable to" language include hardware--for example, circuits, memory storing program instructions executable to implement the operation, etc. Reciting that a unit/circuit/component is "configured to" perform one or more tasks, or is "configurable to" perform one or more tasks, is expressly intended not to invoke 35 U.S.C. 112(f), for that unit/circuit/component. Additionally, "configured to" or "configurable to" can include generic structure (e.g., generic circuitry) that is manipulated by software and/or firmware (e.g., an FPGA or a general-purpose processor executing software) to operate in manner that is capable of performing the task(s) at issue. "Configured to" may also include adapting a manufacturing process (e.g., a semiconductor fabrication facility) to fabricate devices (e.g., integrated circuits) that are adapted to implement or perform one or more tasks. "Configurable to" is expressly intended not to apply to blank media, an unprogrammed processor or unprogrammed generic computer, or an unprogrammed programmable logic device, programmable gate array, or other unprogrammed device, unless accompanied by programmed media that confers the ability to the unprogrammed device to be configured to perform the disclosed function(s).

The foregoing description, for the purpose of explanation, has been described with reference to specific embodiments. However, the illustrative discussions above are not intended to be exhaustive or to limit the present embodiments to the precise forms disclosed. Many modifications and variations are possible in view of the above teachings. The embodiments were chosen and described in order to best explain the principles of the embodiments and its practical applications, to thereby enable others skilled in the art to best utilize the embodiments and various modifications as may be suited to the particular use contemplated. Accordingly, the present embodiments are to be considered as illustrative and not restrictive, and the present embodiments are not to be limited to the details given herein, but may be modified within the scope and equivalents of the appended claims.

## Claims

1. A method comprising:
determining that a file comprises source code for causing malicious activity;
generating, by a processing device and using one or more large language models, LLMs, a natural language, NL, description of the source code responsive to determining that the file comprises the source code for causing the malicious activity;
providing the NL description of the source code to a classification model trained to generate a first set of maliciousness scores each indicating whether the source code is associated with one or more types of malicious activity; and
generating, using the classification model, a maliciousness score for the source code indicating whether the source code is associated with the one or more types of malicious activity.

2. The method of claim 1, further comprising:
acquiring event data indicating that an endpoint device downloaded the file or attempted to execute the file.

3. The method of claim 1 or 2, wherein at least one of:
determining that the file comprises source code for causing malicious activity is without executing executable code associated with the source code;
generating, using the one or more large language models, LLMs, the NL description of the source code is without executing the executable code associated with the source code; or
generating, using the classification model, the maliciousness score for the source code is without executing the executable code associated with the source code.

4. The method of claim 3, further comprising:
determining that the source code is associated with a particular programming language; and
selecting, based on the particular programming language, a first LLM from a plurality of LLMs associated with a plurality of programming languages, each LLM is trained to ingest source code associated with a respective programming language of the plurality of programming languages.

5. The method of any preceding claim, wherein determining that the file comprises source code to cause the malicious activity further comprises:
providing the source code to a second classification model trained to generate a second set of maliciousness scores indicating whether the source codes are associated with the one or more types of malicious activity; and
generating, using the second classification model, a second maliciousness score for the source code indicating that the source code is associated with the one or more types of malicious activity.

6. The method of claim 5, further comprising:
determining that the source code is associated with a particular programming language; and
selecting, based on the particular programming language, the second classification model from a plurality of classification models associated with a plurality of programming languages, each classification model of the plurality of classification models is trained to ingest source code associated with a respective programming language of the plurality of programming languages.

7. The method of any preceding claim, further comprising:
maintaining, in a database, a plurality of NL descriptions associated with a plurality of file identifiers, each NL description of the plurality of NL descriptions is respectively associated with a respective file identifier of the plurality of file identifiers.

8. The method of claim 7, further comprising at least one or more of:
retraining, using the plurality of NL descriptions, the classification model to generate a second set of maliciousness scores each indicating whether the source codes are associated with the one or more types of malicious activity; or
retraining, using the plurality of NL descriptions, the one or more LLMs to generate a set of NL descriptions of source codes.

9. The method of any preceding claim, further comprising:
sending, to an administrative device, an alert indicating at least one of:
the NL description of the source code,
the maliciousness score for the source code, or
a maliciousness category corresponding to the maliciousness score.

10. The method of any preceding claim, further comprising:
determining whether the source code is for causing malicious activity by comparing the maliciousness score to a predetermined threshold value; and
reducing a number of false positives by redefining the file as non-malicious responsive to determining that the source code is not for malicious activity.

11. A system comprising:
a memory; and
a processing device, operatively coupled to the memory, to carry out the method of any preceding claim.

12. A computer program that, when executed by a processing device, causes the processing device to carry out the method of any one of claims 1 to 10.
